(19) Europäisches Patentamt
European Patent Office
Office européen des brevets

(11) Veröffentlichungsnummer: **0 157 795**
**B1**

(12) # EUROPÄISCHE PATENTSCHRIFT

(45) Veröffentlichungstag der Patentschrift: **20.07.88**

(51) Int. Cl.⁴: **C 08 K 5/41**, C 08 L 27/06

(21) Anmeldenummer: **84903347.7**

(22) Anmeldetag: **30.08.84**

(86) Internationale Anmeldenummer: **PCT/EP 84/00261**

(87) Internationale Veröffentlichungsnummer: **WO 85/01054 (14.03.85 Gazette 85/07)**

(54) **STABILISIERTE POLYVINYLCHLORID-FORMMASSEN.**

(30) Priorität: **05.09.83 DE 3331967**

(43) Veröffentlichungstag der Anmeldung: **16.10.85 Patentblatt 85/42**

(45) Bekanntmachung des Hinweises auf die Patenterteilung: **20.07.88 Patentblatt 88/29**

(84) Benannte Vertragsstaaten: **AT BE CH DE FR GB LI LU NL SE**

(56) Entgegenhaltungen: **Patents Abstracts of Japan, vol. 6, No. 169, 02 September 1982, see (C-122) (1047) & JP, A, 57-83534 (SAKAI KAGAKU KOGYO K.K.) 25-05-1982**

(73) Patentinhaber: **Henkel Kommanditgesellschaft auf Aktien, Postfach 1100 Henkelstrasse 67, D-4000 Düsseldorf- Holthausen (DE)**

(72) Erfinder: **ERWIED, Werner, Bruchhauserweg 31, D-4010 Hilden (DE)**
Erfinder: **UPADEK, Horst, Im Sandforst 26, D-4030 Ratingen 6 (DE)**
Erfinder: **WEGEMUND, Bernd, Händelweg 3, D-5657 Haan 1 (DE)**

**EP 0 157 795 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft stabilisierte thermoplastische Formmassen auf Basis von Polyvinylchlorid oder im wesentlichen Vinylchlorid enthaltenden Polymerisaten.

Bei der formgebenden Verarbeitung von thermoplastischen Polymerisaten zu Rohren, Flaschen, Profilen, Folien und dergleichen, beispielsweise durch Extrudieren, Spritzgießen, Blasen, Tiefziehen und Kalandrieren, kann bei den dabei auftretenden hohen Temperaturen leicht ein Abbau des Kunststoffs eintreten. Dies führt zu unerwünschten Verfärbungen und zu einer Minderung der mechanischen Eigenschaften. Aus diesem Grund setzt man den Polymerisaten vor der Warmverformung Stabilisatoren zu, die einem solchen Abbau entgegenwirken. Für Polyvinylchlorid und im wesentlichen Vinylchlorid enthaltende Mischpolymerisate setzt man als Wärmestabilisatoren vor allem anorganische und organische Bleisalze, organische Antimon-Verbindungen, Organozinnverbindungen sowie Cadmium-/Bariumcarboxylate und -phenolate ein. Die genannten Metallverbindungen werden gewöhnlich als Primärstabilisatoren bezeichnet; zur Verbesserung ihrer Wirksamkeit setzt man ihnen häufig Sekundär- oder Costabilisatoren zu. Weitere Einzelheiten über die für Vinylchloridpolymerisate gebräuchlichen Wärmestabilisatoren können der einschlägigen Literatur entnommen werden, beispielsweise der Encyclopedia of Polymer Science and Technology, Band 12, New York, London, Sydney Toronto 1970, Seiten 737 bis 768.

Die genannten Stabilisatoren zeigen in der Praxis eine durchaus befriedigende Wirkung. Gegen den Einsatz von Blei- Antimon- und Cadmiumverbindungen bestehen jedoch gewisse Bedenken, insbesondere solche toxikologischer Art.

Eine Reihe von Organozinnverbindungen ist toxikologisch unbedenklich, ihrem breiten Einsatz steht jedoch ihr hoher Preis entgegen. Aus diesem Grunde sucht man schon seit langem, diese Verbindungen durch weniger bedenkliche und preisgünstige Substanzen zu ersetzen. In diesem Zusammenhang ist man dazu übergegangen, als Primärstabilisatoren fettsaure Salze, aromatische Carboxylate und Phenolate der Metalle Calcium, Barium, Zink und Aluminium zu verwenden, die gegebenenfalls durch Costabilisatoren wie z. B. organische Phosphite, Iminoverbindungen, Epoxyverbindungen, mehrwertige Alkohole oder 1,3-Diketone ergänzt werden. Diese neueren Stabilisatorsysteme sind jedoch in mehr oder minder großem Maße mit dem Mangel behaftet, daß sie den zu stabilisierenden Formmassen eine geringe Anfangsstabilität und/oder eine zu geringe Langzeitstabilität verleihen. Es besteht daher ein Bedürfnis nach Substanzen, mit deren Hilfe sich die Anfangs- und/oder Langzeitwirkung derartiger Stabilisatorsysteme entscheidend verbessern läßt.

Die JP-A-57 83 534 beschreibt einige β-Oxosulfoxide und β-Oxosulfone, die als Stabilisatoren bzw. Costabilisatoren für chlorhaltige Polymerisate eingesetzt werden können. Diese Verbindungen besitzen keine -COOM- der $CONH_2$-Gruppe und stellen keine Homologen, Isomeren oder Analoga der hier als Bestandteil von stabilisierten Polyvinylchlorid -Formmassen beschriebenen Substanzen dar.

Es wurde gefunden, daß sich bestimmte β-Oxosulfoxide und β-Oxosulfone mit Erfolg zur Stabilisierung von Polyvinylchlorid-Formmassen verwenden lassen. Dabei wurde insbesondere festgestellt, daß diese Verbindungen in der Lage sind, die stabilisierende Wirkung von Primärstabilisatoren auf Basis von Seifen, aromatischen Carboxylaten und Phenolaten der Metalle Calcium, Bariumk, Zink und Aluminium sowie von Organozinnverbindungen in nicht vorhersehbarem Maße zu erhöhen.

Gegenstand der Erfindung sind demnach stabilisierte Polyvinylchlorid-Formmassen, enthaltend übliche Gleitmittel und andere übliche Verarbeitungshilfsmittel sowie eine Stabilisatorkombination aus (1) Primärstabilisatoren ausgewählt aus der Gruppe bestehend aus Metallseifen, aromatischen Metallcarboxylaten, Metallphenolaten und Organozinnverbindungen und (2) Costabilisatoren, dadurch gekennzeichnet, daß sie mindestens eine Verbindung der Formel I und/oder der Formel II

$$R-\overset{\overset{\displaystyle O}{\|}}{S}-CH_2-\overset{\overset{\displaystyle O}{\|}}{C}-X \qquad (I)$$

$$R-\underset{\underset{\displaystyle O}{\|}}{\overset{\overset{\displaystyle O}{\|}}{S}}-CH_2-\overset{\overset{\displaystyle O}{\|}}{C}-X \qquad (II)$$

in denen R einen Alkylrest mit 3 bis 18 Kohlenstoffatomen, einen Cycloalkylrest mit 5 oder 6 Kohlenstoffatomen, einen Phenylrest, einen Alkylphenylrest mit 7 bis 11 Kohlenstoffatomen oder einen X - CO - $CH_2$ - Rest darstellt, während X für eine $NH_2$ - Gruppe oder eine OM - Gruppe steht, in der M Lithium, Natrium oder Kalium bedeutet.

Weiterhin sind Gegenstand der Erfindung Stabilisatorkombinationen für Polyvinylchlorid-Formmassen, die Primärstabilisatoren, ausgewählt aus der aus Metallseifen, aromatischen Metallcarboxylaten, Metallphenolaten und Organozinnverbindungen bestehenden Gruppe und mindestens eine Verbindung der Formel I und/oder der Formel II als Costabilisatoren und gegebenenfalls übliche Gleitmittel und andere übliche Verarbeitungshilfsmittel enthalten.

Bei den Verbindungen der Formeln I und II handelt es sich um bekannte Substanzen, die nach gängigen Methoden der organischen Synthese erhalten werden können.

Die durch die Formel 7 definierten Sulfinylverbindungen können beispielsweise durch Alkylierung von Natriumsulfid bzw. Natriummercaptiden mit α-Halogencarbonylverbindungen zu den entsprechenden Thioethern und anschließende Oxidation mit Wasserstoffperoxid erhalten werden. Allgemeine Arbeitsvorschriften geben z. B. A. Schöberl und A. Wagner in Houben-Weyl, Methoden der Organischen Chemie, Bd.9, S. 97 f., S. 105 f. und S. 211 (1955), an.

Die durch die Formel II beschriebenen Sulfonylverbindungen sind generell über die Oxidation der entsprechenden Thioether, beispielsweise mit Kaliumpermanganat (A. Schöberl und A. Wagner in Houben-Weyl, Methoden der Organischen Chemie, Bd. 9, S. 229 f. (1955)) zugänglich.

Unter Metallseifen werden im Zusammenhang mit der Erfindung fettsaure Salze des Calciums, Bariums, Zinks und Aluminiums verstanden. Diese Metallseifen leiten sich vorzugsweise von Fettsäuren mit 8 bis 22 Kohlenstoffatomen ab. Die Fettsäurekomponente kann dabei insbesondere aus Capryl-, Caprin-, Laurin-, Myristin-, Palmitin-, Stearin- und Behensäure bestehen. Darüber hinaus kommen verzweigtkettige Fettsäure wie 2-Ethylhexansäure, 2-Hexyldecansäure und 2-Octyldodecansäure und Hydroxyfettsäuren, beispielsweise 9, (10)-Hydroxystearinsäure, 9, 10-Dihydroxystearinsäure und 9 (10)-Hydroxy-10 (9)-methoxystearinsäure in Betracht. Die erfindungsgemäßen Zusammensetzungen können sowohl Salze einzelner Fettsäuren als auch Salze von Fettsäuregemischen enthalten, wie sie aus natürlichen Fetten und Ölen gewonnen werden.

Als aromatische Metallcarboxylate kommen vor allem die Calcium-, Barium-, Zink- und Aluminiumsalze der Benzoesäure und substituierter Benzoesäuren, insbesondere alkylsubstituierter Benzoesäuren, in Betracht.

Als Metallphenolate kommen die Phenolate, Alkylphenolate und Naphthenate des Calciums, Bariums, Zinks und Aluminiums in Betracht. Auch sogenannte überbasische Phenolate oder Naphtenate sind brauchbare Zusätze.

Als Organozinnverbindungen kommen vor allem die Dialkylverbindungen des vierwertigen Zinns in Betracht, beispielsweise Dimethylzinn-S,S-bis-(isooctylthioglykolat), Dibutyzinndilaurat, Dibutylzinnmaleinat, Dibutylzinnbis-(monobutylmaleinat), Dibutylzinnbis-(monobutylmaleinat), Dibutylzinnbis-(laurylmercaptid), Dibutylzinn-β-mercaptopropionat, Dibutylzinn-S,S-bis-(isooctylthioglykolat) Di-n-octylzinnmaleinat, Di-n-octylzinnbis-(monoethylmaleinat), Di-n-octylzinn-β-mercaptopropionat und Di-n-octylzinn-S,S-bis-(isooctylthioglykolat), ferner Monoalkylzinnverbindungen, wie z. B. Monomethylzinntris-(isooctylthioglykolat) und Mono-n-octylzinntris-(isooctylthioglykolat), wobei die Monoalkylverbindungen des vierwertigen Zinns vorzugsweise in Abmischungen mit Dialkylzinnverbindungen eingesetzt werden.

Die stabilisierten Polyvinylchlorid-Formmassen enthalten in der Regel auf 100 Gewichtsteile Polymerisat 0,02 bis 5 Gewichtsteile Verbindungen der Formeln I und II. Die Metallseifen, aromatischen Metallcarboxylate und Metallphenolate können in Mengen von 0,05 bis 5 Gewichtsteilen pro 100 Gewichtsteile Polymerisat anwesend sein.

In einer speziellen Ausführungsform der Erfindung enthalten die Polyvinylchlorid-Formmassen auf 100 Gewichtsteile Polymerisat 0,1 bis 3 Gewichtsteile Calciumseife und/oder 0,1 bis 3 Gewichtsteile Bariumseife und/oder 0,1 bis 3 Gewichtsteile Zinkseife, wobei sich die Seifen vorzugsweise von Fettsäuren mit 8 bis 22 Kohlenstoffatomen ableiten und der Gesamtanteil der Metallseifen normalerweise 3 Gewichtsteile pro 100 Gewichtsteile Polymerisat nicht übersteigt

In vielen Fällen kann es günstig sein, den Polyvinylchlorid-Formmassen auf 100 Gewichtsteile Polymerisat 0,2 bis 5 Gewichtsteile eines synthetischen, kristallinen, 13 bis 25 Gewichtsprozent gebundenes Wasser enthaltenden, feinteiligen Natriumalumosilikats zuzusetzen, das - bezogen auf die wasserfreie Form - die Zusammensetzung 0,7 bis 1,1 $Na_2O \cdot Al_2O_3 \cdot 1{,}3 - 2{,}4\ SiO_2$ hat.

Bei den oben definierten Natriumalumosilikaten handelt es sich um Zeolithe vom Typ NaA, die einen durchschnittlich wirksamen Porendurchmesser von $4 \times 10^{-10}$ m (4 Å) besitzen, weshalb sie auch als Zeolithe 4 A bezeichnet werden. Die Verwendung dieser Zeolithe als Hilfsmittel bei der Verarbeitung von Thermoplasten ist bekannt, siehe beispielsweise US-PS-4 000 100 und EP-A-00 27 588.

Neben den genannten Zusätzen können die erfindungsgemäßen Polyvinylchlorid-Formmassen Partialester aus Polyolen mit 2 bis 6 Kohlenstoffatomen und 2 bis 6 Hydroxylgruppen und Fettsäuren mit 8 bis 22 Kohlenstoffatomen als Gleitmittel mit stabilisierender Wirkung enthalten. Diese Partialester besitzen pro Molekül im Durchschnitt mindestens eine freie Polyol-Hydroxylgruppe und können durch Veresterung entsprechender Polyole mit Fettsäuren der angegebenen Kettenlänge - gegebenenfalls in Gegenwart von üblichen Veresterungskatalysatoren - hergestellt werden. Polyole und Fettsäuren werden dabei im Molverhältnis 1 : 1 bis 1 : (n-1) miteinander umgesetzt, wobei n die Anzahl der Hydroxylgruppen des Polyols bedeutet. Vorzugsweise setzt man die Komponenten in solchen Menge ein, daß sich Partialester mit einer OH-Zahl zwischen 140 und 580, insbesondere zwischen 170 und 540 bilden. Das Reaktionsprodukt, das jeweils ein Estergemisch darstellt, soll eine Säurezahl unter 15, vorzugsweise unter 8, haben. Geeignete Polyolkomponenten sind Ethylenglykol, Propylenglykol-1,2, Propylenglykol-1,3, Butylenglykol-1,2, Butylenglykol-1,4, Hexandiol-1,6, Neopentylglykol, Trimethylolethan, Erythrit, Mannit und Sorbit sowie insbesondere Glycerin, Trimethylolpropan, Ditrimethylolpropan, Pentaerythrit und Dipentaerythrit. Als geeignete Fettsäurekomponenten seien beispielsweise Capryl-, Caprin-, Laurin-, Myristin-, Palmitin-, Stearin- und Behensäure genannt. Es können auch synthetische Fettsäuren der erwähnten Kohlenstoffzahl oder ungesättigte Fettsäuren, wie Ölsäure und Linolensäure, oder auch substituierte Fettsäuren, insbesondere hydroxylierte Säuren wie 12-Hydroxystearinsäure eingesetzt werden. Aus praktischen Gründen setzt man

zumeist Gemische von Fettsäuren ein, wie sie aus natürlichen Fetten und Ölen gewonnen werden.

Die erfindungsgemäßen Polyvinylchlorid-Formmassen enthalten die Polyolpartialester in der Regel in Mengen von 0,2 bis 2,0 Gewichtsteilen auf 100 Gewichtsteile Polymerisat.

Es kann auch von Vorteil sein, wenn die erfindungsgemäßen Polyvinylchlorid-Formmassen Thioglykolsäureester von Alkoholen mit 1 bis 6 Hydroxylgruppen und 3 bis 36 Kohlenstoffatomen enthalten. Hier kommen Thioglykolsäureester mit relativ geringer Flüchtigkeit in Betracht, beispielsweise Thioglykolsäureester aus Glycerins, Trimethylolpropans, der isomeren Octanole, des Decanols, der Guerbetalkohole aus Octanolen, oder auch technischer dimerisierter Fettalkohole. Diese Ester können auch freie Hydroxylgruppen aufweisen; ebenso ist es möglich, Gemische aus Thioglykolsäureester und freien mehrwertigen Alkoholen einzusetzen.

Die erfindungsgemäßen Polyvinylchlorid-Formmassen können die genannten Thioglykolsäureester in Mengen von 0,1 bis 10 Gewichtsteilen auf 100 Gewichtsteile Polymerisat enthalten.

Weiterhin kann gegebenenfalls eine günstige Wirkung erzielt werden, wenn in den erfindungsgemäßen Polyvinylchlorid-Formmassen 1,3-Dicarbonylverbindungen vorhanden sind. Im allgemeinen kommen solche 1,3-Diketone in Frage, die wenigstens zwei Alkyl-, Aryl- oder Aralkylreste, beispielsweise Dodecyl-, Hexadecyl-, Octadecyl-, Phenyl oder Benzylreste im Molekül enthalten. Typische Vertreter dieser Substanzklasse sind Palmitoylstearoylmethan oder Stearoylbenzoylmethan.

Die erfindungsgemäßen Polyvinylchlorid-Formmassen können solche 1,3-Dicarbonylverbindungen in Mengen von 0,1 bis 5 Gewichtsteilen auf 100 Gewichtsteile Polymerisat enthalten.

Die erfindungsgemäßen Polyvinylchlorid-Formmassen können weitere Hilfsstoffe und Verarbeitungshilfsmittel enthalten, beispielsweise wachsartige Kohlenwasserstoffe wie Paraffine mit einem Erstarrungspunkt im Bereich von 40 bis 110°C und/oder niedermolekulare Polyethylensorten, deren Erweichungspunkt unterhalb von 140°C liegen soll. Zweckmäßigerweise werden diese wachsartigen Substanzen mit freien Fettsäuren kombiniert, wobei Fettsäuren mit 12 bis 22 Kohlenstoffatomen, wie sie aus natürlichen Fetten und Ölen zugänglich sind, bevorzugt werden. Besonders günstige Ergebnisse werden mit Palmitin- und Stearinsäure erhalten. Auch handelsübliche Fettalkohole mit 12 bis 22 Kohlenstoffatomen können in den erfindungsgemäßen thermoplastischen Formmassen enthalten sein.

Als weitere Additive kommen bestimmte Polymerisate in Betracht, beispielsweise solche auf Basis von Methylmethacrylat, Methylmethacrylat/Butylacrylat, Ethylacrylat, Methylmethaacrylat/Acrylsäure und Butylmethacrylat/Styrol. Derartige Polymerisate und Copolymerisate werden als flow promoter bezeichnet. Polymerisate aus Butylacrylat wirken bei der formgebenden Verarbeitung von Polyvinylchlorid-Formmassen auch als Trennmittel.

In bestimmten Fällen kann es von Vorteil sein, wenn die erfindungsgemäßen Polyvinylchlorid-Formmassen Antiooxydationsmittel enthalten. Hier kommen beispielsweise Diphenylolpropan, 2,5-Bis-(1,1)-dimethylpropyl)-hydrochinon, 2,6-Di-tert.-butyl-4-methylphenol, Octadecyl-(3,5-Di-t-tert.-butyl-4-hydroxylphenyl)-propionat, 1,1,3-Tris-(5-tert.-butyl-4-hydroxy-2-methylphenyl)-butan oder Dilaurylthiodipropionat in Betracht.

Polyvinylchlorid-Formmassen, die für die Herstellung von Hohlkörpern und Folien bestimmt sind, können auf 100 Gewichtsteile Polymerisate 0,5 bis 5 Gewichtsteile epoxydiertes Sojaöl und 0,1 bis 0,8 Gewichtsteile höhermolekulares Esterwachs enthalten. Als hochmolekulare Esterwachse kommen Montanwachse, Paraffinoxydate und Komplexester in Betracht.

Die Basis der erfindungsgemäßen stabilisierten thermoplastischen Formmassen besteht aus Homopolymerisaten oder Mischpolymerisaten des Vinylchlorids. Die Mischpolymrisaten enthalten wenigstens 50 Molprozent, vorzugsweise wenigstens 80 Molprozent Vinylchlorid. Die Polymerisate können auf beliebigem Wege, beispielsweise durch Suspensions-, Emulsions- oder Blockpolymerisation hergestellt worden sein. Ihr K-Wert kann zwischen etwa 35 und 80 liegen. In den Rahmen der Erfindung fallen auch Formmassen auf Basis von nachchloriertem Polyvinylchlorid sowie solche auf Basis von Harzgemischen, die überwiegend Homopolymerisate oder Copolymerisate des Vinylchlorids enthalten. Den Begriff Polyvinylchlorid-Formmassen erfaßt erfindungsgemäß sowohl die zur Verformung bestimmten Halbfertigprodukte als auch aus diesen Massen beliebig geformte Artikel.

Die einzelnen Komponenten der erfindungsgemäßen Polyvinylchlorid-Formmassen können durch Vermischen der Bestandteile in konventionellen Mischern vereinigt werden. Es ist dabei möglich, zunächst die verschiedenen Komponenten der Stabilisatorkombination miteinander zu vermischen und dieses Gemisch dann mit dem Polyvinylchlorid-Basismaterial zu vereinigen.

Die erfindungsgemäßen Stabilisatorkombination für Polyvinylchlorid-Formmassen bestehen im einfachsten Fall aus einem Primärstabilisator ausgewählt aus der Gruppe bestehend aus Metallseifen, aromatischen Metallcarboxylaten, Metallphenolaten und Organozinnverbindungen und mindestens einer Verbindung der Formeln I und II.

Eine spezielle Ausführungsform der Erfindung sieht Stabilisatorkombinationen vor, in denen auf 1 Gewichtsteil der Verbindung der Formel I 0,5 bis 10 Gewichtsteile Calciumseifen und/oder 0,5 bis 10 Gewichtsteile Bariumseifen und/oder 0,5 bis 10 Gewichtsteile Zinkseifen vorhanden sind, wobei sich die Seifen von Fettsäuren mit 8 bis 22 Kohlenstoffatomen ableiten. Der Gesamtanteil der gennanten Metallseifen soll dabei 20 Gewichtsteile pro 1 Gewichtsteil Verbindungen der Formeln I und II nicht überschreiten.

Als weitere Grundkomponente der erfindungsgemäßen Stabilisatorkombination kommen die bereits weiter oben beschriebenen Natriumalumosilikate in Betracht, die in Mengen von 0,2 bis 20 Gewichtsteilen auf 1 Gewichtsteil Verbindungen der Formeln I und II vorhanden sein können. Bevorzugt enthalten die

Stabilisatorkombinationen wenigstens ein Gleitmittel aus der Gruppe der oben definierten Partialester aus Fettsäuren und Polyolen. Dabei kann der Partialester in Mengen von 0,2 bis 5 Gewichtsteile auf 1 Gewichtsteil Verbindungen der Formeln I und II vorhanden sein.

Die erfindungsgemäßen Stabilisatorkombinationen können gewünschtenfalls durch weitere Hilfsstoffe und Verarbeitungshilfsmittel für Polyvinylchlorid-Formmassen ergänzt werden.

Die Stabilisatorkombinationen können durch einfaches mechanisches Vermischen der Bestandteile mit Hilfe von konventionellen Mischern erhalten werden. Bei der Herstellung fallen sie im allgemeinen als rieselfähige, nichtstaubende Produkte an.

**Beispiele**

**Herstellung der Verbindungen der Formel I**

1. Methylsulfinylacetamid

In ein Gemisch aus 13 g (0,15 Mol) Methylmercaptoacetonitril und 21 g (0,45 Mol) Ameisensäure wurde bei Raumtemperatur 6 Stunden lang Chlorwasserstoffgas mit einer Geschwindigheit von ca. 20 bis 25 l/h eingeleitet. Anschließend wurde das Reaktionsgemiscn bei 70°C in einem Rotationsverdampfer zur Trockene eingedampft. Der verbleibende Rückstand wurde aus Ethanol umkristallisiert. Dabei wurden 9,5 g Methylmercaptoacetamid in Form von weißen Kristallen vom Schmelzpunkt 102 - 103,5°C erhalten.

Unter Rühren und Kühlung wurden 11,3 g 30gewichtsprozentige Wasserstoffperoxidlösung (0,1 Mol $H_2O_2$) zu einer Lösung von 9,5 g (0,09 Mol) Methylmercaptoacetamid in 200 ml Aceton gegeben. Anschließend wurde das Gemisch 4 Stunden lang unter Kühlung auf 28°C gehalten. Danach wurden im Rotationsdampfer Aceton und Wasser aus dem Reaktionsgemisch abdestilliert. Der zurückbleibende Rückstand wurde zweimal aus Acetonitril umkristallisiert. Es wurden 2,3 g Methylsulfinylacetamid als weiße Kristalle vom Schmelzpunkt 80 - 82°C erhalten.

2. Natriumsalz der Decylsulfinylessigsäure

Zu einer Lösung von 54 g (1 Mol) Natriummethylat in 450 ml Methanol wurden bie Raumtemperatur langsam 174 g (1 Mol) Decylmercaptan getropft. Zu dem entstandenen Gemisch wurden im Verlauf von einer Stunde 108,5 g (1 Mol) Chloressigsäuremethylester getropft. Anschließend wurde das Gemisch 4 Stunden lang zum Rückflußkochen erhitzt. Die abgekühlte Reaktionslösung wurde mit einem Eis/Wassergemisch versetzt. Das Gemisch wurde mit Ether extrahiert und die Etherlösung neutral gewaschen. Nach dem Abdestillieren des Ethers wurde das Produkt im Ölpumpenvakuum destilliert. Bei 102 - 120°C/0,01 mbar gingen 110 g Decylmercaptoessigsäuremethylester über.

Die Gesamtmenge des erhaltenen Decylmercaptoessigsäuremethylesters wurde mit Natriumhydroxid im Überschuß (10 Molprozent) in Methanol/Wasser 30 Minuten lang zum Rückflußkochen erhitzt. Aus der abgekühlten Lösung wurde die Decylmercaptoessigsäure durch Ansäuern mit Salzsäure ausgefällt und durch Filtration abgetrennt.

Die erhaltenen 84,5 g (0,36 Mol) Decylmercaptoessigsäure wurden in 400 ml Aceton gelöst und unter Rühren und Kühlen mit 45 g 30gewichtsprozentiger Wasserstoffperoxidlösung (0,4 Mol $H_2O_2$) versetzt. Das Gemisch wurde unter Kühlen 4 Stunden lang bei 28°C gerührt. Danach wurden im Rotationsverdampfer Aceton und Wasser aus dem Reaktionsgemisch abgedampft.

Die als Rückstand verbliebenen 81,5 g (0,33 Mol) Decylsulfinylessigsäure wurden mit einer Lösung von 13,1 g (0,33 Mol) Natriumhydroxid in 200 ml Wasser 30 Minuten lang bei 70°C gerührt. Durch Eindampfen im Rotationsverdampfer wurden 88 g Natriumdecylsulfinylacetat erhalten.

3. Natriumsalz der Phenylsulfinylessigsäure

Zu einer Lösung von 210 g (1,25v Mol) Phenylmercaptoessigsäure in 500 ml Eisessig wurden langsam 150 g 30gewichtsprozentige Wasserstoffperoxidlösung (1,33 Mol $H_2O_2$) getropft, wobei die Temperatur des Reaktionsgemisches durch Kühlen auf 40 - 60°C gehalten wurde. Nach dem Abklingen der stark exothermen Reaktion wurde das Gemisch über Nacht bei Raumtemperatur stehengelassen. Wasser und Essigsäure wurden im Rotationsverdampfer bei einer Badtemperatur von 35 - 40°C abdestilliert. Als Rückstand verblieben 205 g Phenylsulfinylessigsäure.

Zur Herstellung des Natriumsalzes wurden 184 g (1 Mol) Phenylsulfinylessigsäure mit 40 g (1 Mol) Natriumhydroxid in 400 ml Wasser 30 Minuten lang bei 70°C gerührt. Durch Eindampfen im Rotationsverdampfer wurden 204 g Natriumphenylsulfinylacetat erhalten.

4. Dinatriumsalz der Sulfinyldiessigsäure

Zu einer Lösung von 180 g (1,2 Mol) Thiodiglykolsäure in 600 ml Aceton wurden unter Rühren und Kühlen 162,2 g 30gewichtsprozentige Wasserstoffperoxidlösung (1,44 Mol $H_2O_2$) langsam zugetropft. Nach beendeter Zugabe wurde das Gemisch 4 Stunden lang bei 28°C weitergerührt. Danach wurde Aceton und Wasser im Rotationsverdampfer abdestilliert. Der zurückbleibende Kristallbrei wurde viermal mit jeweils ca. 400 ml Ether gewaschen und anschließend getrocknet. Dabei wurden 165,5 g Sulfinyldiessigsäure vom Schmelzpunkt 118 -

119°C erhalten. Zur Herstellung des Natriumsalzes wurden 165,5 g (0,83 Mol) Sulfinyldiessigsäure mit 66,2 g (1,66 Mol) Natriumhydroxid in 400 ml Wasser 30 Minuten lang bei 70°C gerührt. Durch Eindampfen im Rotationsverdampfer wurden 199,5 g Natriumsulfinyldiacetat erhalten.

5. Sulfinyldiacetamid

Zu einer Lösung von 64 g (0,5 Mol) Natriumsulfidhydrat in 500 ml Wasser wurden unter Rühren nach und nach 93,5 g (1 Mol) 2-Chlor-acetamid gegeben, wobei die Temperatur des Reaktionsgemisches bis auf 60°C anstieg. Nach dem Ende der Zugabe wurde das Gemisch 2 Stunden lang bei Raumtemperatur weitergerührt, bevor es im Rotationsverdampfer zur Trockene eingedampft wurde. Der feste Rückstand wurde sechsmal mit jeweils 400 ml siedendem Ethanol extrahiert. Die vereinigten Ethanolextrakte wurden im Rotationsverdampfer zur Trockene eingedampft und das erhaltene Produkt aus Wasser umkristallisiert. Dabei wurden 22,9 g Thiodiglykolsäurediamid als weiße Kristalle vom Schmelzpunkt 163,5 - 167,5°C erhalten.

22,5 g (0,15 Mol) Thiodiglykolsäurediamid wurden in 250 ml Aceton gelöst und unter Rühren und Kühlen mit 18,8 g 30gewichtsprozentiger Wasserstoffperoxidlösung (0,17 Mol $H_2O_2$) versetzt. Das Gemisch wurde unter Kühlen 4 Stunden lang bei 28°C gerührt. Beim Abdestillieren von Aceton und Wasser im Rotationsverdampfer verblieben 23,2 g Sulfinyldiacetamid als fester weißer Rückstand.

6. Natriumsalz der Phenylsulfonylessigsäure

Zu einer Lösung von 100 g (0,6 Mol) Phenylmercaptoessigsäure, 33,6 g (0,6 Mol) Kaliumhydroxid und 100 g Magnesiumsulfat in 1200 ml Wasser wurde bei Raumtemperatur unter Rühren eine Lösung von 128 g (0,81 Mol) Kaliumpermanganat in 3080 ml Wasser langsam zugetropft, wobei die Innentemperatur bis 36°C anstieg. Nach beendeter Zugabe wurde 2 Stunden lang weitergerührt. Das Reaktionsgemisch wurde über Nacht stehengelassen. Danach wurde bis zur Entfärbung des Permanganats Schwefeldioxid eingeleitet. Der ausgefallene Braunstein wurde abfiltriert. Das Filtrat wurde mit Salzsäure angesäuert und mit Ether extrahiert. Die vereinigten Etherextrakte wurden mit Natriumsulfat getrocknet. Nach dem Abdampfen des Ethers verblieben 68,9 g Phenylsulfonylessigsäure als farblose Kristalle vom Schmelzpunkt 112 - 113°C.

65 g (0,33 Mol) Phenylsulfonessigsäure wurden in einer Lösung von 13,2 g (0,33 Mol) Natriumhydroxid in 200 ml Wasser 30 Minuten lang unter Rühren auf 70°C erhitzt. Durch Eindampfen im Rotationsverdampfer wurden 71,5 g Natriumphenylsulfonylacetat erhalten.

**Beispiele A bis I**

Die thermoplastische Formmasse A (Vergleichszusammensetzung) wurde durch mechanisches Vermischen von

| | | |
|---|---|---|
| 100 | GT | Suspensions-PVC K-Wert 70; Vestolit® A 7054; Hersteller: Chemische Werke Hüls AG, Marl) |
| 0,2 | GT | Stearinsäure |
| 0,2 | GT | Paraffin, Smp. 71°C |
| 0,5 | GT | Pentaerythritester der Stearinsäure (Molverhältnis 1 : 1,5; OH-Zahl 212) |

(GT = Gewichtsteile) mit der Stabilisatorkombination A' aus

| | | |
|---|---|---|
| 1,0 | GT | Calciumstearat |
| 0,5 | GT | Zinkstearat |

erhalten.

Für die Herstellung der erfindungsgemäßen Polyvinylchlorid-Formmassen B bis I wurde die Stabilisatormischung A' zu den Stabilisatorkombinationen B' bis I' durch folgende Zusätze abgewandelt:

In B': 0,5 GT Methylsulfinylacetamid (Herstellungsbeispiel 1)
In C': 0,5 GT Natriumsalz der Decylsulfinylessigsäure Herstellungsbeispiel 2)
In D': 0,5 GT Natriumsalz der Phenylsulfinylessigsäure (Herstellungsbeispiel 3)
In E': 0,5 GT Dinatriumsalz der Sulfinyldiessigsäure (Herstellungsbeispiel 4)
In F': 0,5 GT Dinatriumsalz der Sulfinyldiessigsäure
0,25 GT Benzoylstearoylmethan
In G': 0,5 GT Sulfinyldiacetamin (Herstellungsbeispiel 5)
In H': 0,5 GT Methylsulfonylacetamid (käuflich)
0,5 GT Natriumalumosilikat
In I': 0,5 GT Natruimsalz der Phenylsulfonylessigsäure (Herstellungsbeispiel 6).

In der Stabilisatorkombination H' wurde als Natriumalumosilikat ein feinteiliger synthetischer Zeolith NaA ($Na_2O : Al_2O_3 : SiO_2 = 0,9 : 1 : 2,4$; Wassergehalt 19 Gewichtsprozent) eingesetzt.

Die Zusammensetzungen der auf diese Weise erhaltenen stabilisierten Polyvinylchlorid-Formmassen A bis I können der nachstehenden Tabelle entnommen werden.

Die Wirkung der Stabilisatorkombinationen A' bis I' in den entsprechenden Polyvinylchlorid-Formmassen A bis I wurde anhand der "statischen Thermostabilität" von Walzfellen geprüft. Zu diesem Zweck wurden die Formmassen aus einem Laborwalzwerk der Abmessungen 350 x 150 mm (Fa. Schwabenthan) bei einer Walzentemperatur von 170°C und einer Walzendrehzahl von 300 Upm im Gleichlauf im Verlauf von 5 Minuten zu Prüffellen verarbeitet. Die ca. 0,5 mm dicken Felle wurden zu quadratischen Probestücken mit 10 mm Kantenlänge zerschnitten, die anschließend in einem Trockenschrank mit 6 rotierenden Horden (Heraeus FT 420 R) einer Temperatur von 130°C ausgesetzt wurden. Im Abstand von 10 Minuten wurden Proben entnommen und deren Farbveränderung begutachtet.

In der nachstehenden Tabelle ist jeweils der Zeitraum angegeben, nach dem der Test wegen zu starker Verfärbung (Stabilitätsabbruch) beendet wurde.

**Tabelle**

| Bestandteil (GT) | Polyvinylchlorid-Formmassen | | | | | | | | |
|---|---|---|---|---|---|---|---|---|---|
| | A | B | C | D | E | F | G | H | I |
| Suspensions-PVC | 100 | 100 | 100 | 100 | 100 | 100 | 100 | 100 | 100 |
| Calciumstearat | 1,0 | 1,0 | 1,0 | 1,0 | 1,0 | 1,0 | 1,0 | 1,0 | 1,0 |
| Zinkstearat | 0,5 | 0,5 | 0,5 | 0,5 | 0,5 | 0,5 | 0,5 | 0,5 | 0,5 |
| Stearinsäure | 0,2 | 0,2 | 0,2 | 0,2 | 0,2 | 0,2 | 0,2 | 0,2 | 0,2 |
| Paraffin | 0,2 | 0,2 | 0,2 | 0,2 | 0,2 | 0,2 | 0,2 | 0,2 | 0,2 |
| Pentaerythritstearinsäureester | 0,5 | 0,5 | 0,5 | 0,5 | 0,5 | 0,5 | 0,5 | 0,5 | 0,5 |
| Methylsulfinylacetamid | - | 0,5 | - | - | - | - | - | - | - |
| Na-Decylsulfinylacetat | - | - | 0,5 | - | - | - | - | - | - |
| Na-Phenylsulfinylacetat | - | - | - | 0,5 | - | - | - | - | - |
| Di-Nasulfonyldiacetat | - | - | - | - | 0,5 | 0,5 | - | - | - |
| Sulfinyldiacetamid | - | - | - | - | - | - | 0,5 | - | - |
| Methylsulfonylacetamid | - | - | - | - | - | - | - | 0,5 | - |
| Na-Phenylsulfonylacetat | - | - | - | - | - | - | - | - | 0,5 |
| Benzoylstearoylmethan | - | - | - | - | - | 0,25 | - | - | - |
| Na-Alumosilikat | - | - | - | - | - | - | - | 0,5 | - |
| Stabilitätsabbruch (min) | 40 | 60 | 60 | 80 | 70 | 70 | 60 | 70 | 60 |

**Patentansprüche**

1. Stabilisierte Polyvinylchlorid-Formmassen, enthaltend übliche Gleitmittel und andere übliche Verarbeitungshilfsmittel sowie eine Stabilisatorkombination aus (1) Primärstabilisatoren ausgewählt aus der Gruppe bestehend aus Metallseifen, aromatischen Metallcarboxylaten, Metallphenolaten und Organozinnverbindungen und (2) Costabilisatoren, dadurch gekennzeichnet, daß sie mindestens eine Verbindung der Formel I und/oder der Formel II

```
      O        O
      ||       ||
R - S - CH2 -  C - X        (I)
```

```
      O        O
      ||       ||
R - S - CH2 -  C - X        (II)
      ||
      O
```

in denen R einen Alkylrest mit 1 bis 18 Kohlenstoffatomen, einen Cycloalkylrest mit 5 oder 6 Kohlenstoffatomen, einen Phenylrest, einen Alkylphenylrest mit 7 bis 11 Kohlenstoffatomen oder einen X - CO - $CH_2$ - Rest darstellt, während X für eine $NH_2$ Gruppe oder eine OM - Gruppe steht, in der M Lithium, Natrium oder Kalium bedeutet, als Costabilisatoren enthalten.

2. Stabilisierte Polyvinylchlorid-Formmassen nach Anspruch 1, dadurch gekennzeichnet, daß sie auf 100 Gewichtsteile Polymerisat 0,02 bis 5 Gewichtsteile mindestens einer Verbindung der Formel I und/oder der Formel II in Anspruch 1 enthalten.

3. Stabilisierte Polyvinylchlorid-Formmassen nach den Ansprüchen 1 und 2, dadurch gekennzeichnet, daß sie auf 100 Gewichtsteile Polymerisat 0,1 bis 3,0 Gewichtsteile Calciumseifen und/oder 0,1 bis 3,0 Gewichtsteile Bariumseifen und/oder 0,1 bis 3,0 Gewichtsteile Zinkseifen enthalten, wobei sich die Seifen von Fettsäuren mit 0 bis 22 Kohlenstoffatomen ableiten.

4. Stabilisierte Polyvinylchlorid-Formmassen nach den Ansprüchen 1 bis 3, dadurch gekennzeichnet, daß sie auf 100 Gewichtsteile Polymerisat 0,2 bis 5 Gewichtsteile eines synthetischen, kristallinen, 13 bis 25 Gewichtsprozent gebundenes Wasser enthaltenden, feinteiligen Natriumalumosilikats enthalten, das - bezogen auf die wasserfreie Form - die Zusammensetzung

0,7 - 1,1 $Na_2O \cdot Al_2O_3 \cdot$ 1,3 - 2,4 $SiO_2$ hat.

5. Stabilisatorkombinationen für Polyvinylchlorid-Formmassen, enthaltend Primärstabilisatoren ausgewählt aus der Gruppe bestehend aus Metallseifen, aromatischen Metallcarboxylaten, Metallphenolaten und Organozinnverbindungen, Costabilisatoren und gegebenenfalls übliche Gleitmittel und andere übliche Verarbeitungshilfsmittel, dadurch gekennzeichnet, daß sie mindestens eine Verbindung der Formel I und/oder der Formel II in Anspruch 1 als Costabilisatoren enthalten.

6. Stabilisatorkombinationen nach Anspruch 5, dadurch gekennzeichnet, daß sie auf 1 Gewichtsteil Verbindung der Formel I und/oder der Formel II in Anspruch 1 0,5 bis 10 Gewichtsteile Calciumseifen und/oder 0,5 bis 10 Gewichtsteile Bariumseifen und/oder 0,5 bis 10 Gewichtsteile Zinkseifen enthalten, wobei sich die Seifen von Fettsäuren mit 0 bis 22 Kohlenstoffatomen ableiten und der Gesamtanteil der Metallseifen 20 Gewichtsteile pro 1 Gewichtsteil Verbindungen der Formel I und II nicht überschreitet.

7. Stabilisatorkombinationen nach den Ansprüchen 5 und 6, dadurch gekennzeichnet, daß sie auf 1 Gewichtsteil Verbindung der Formel I und/oder der Formel II in Anspruch 1 0,2 bis 20 Gewichtsteile eines synthetischen, kristallinen, 13 bis 25 Gewichtsprozent gebundenes Wasser enthaltenden, feinteiligen Natriumalumosilikats enthalten, das - bezogen auf die wasserfreie Form - die Zusammensetzung 0,7 - 1,1 $Na_2O \cdot Al_2O_3 \cdot$ 1,3 - 2,4 $SiO_2$ hat.

**Claims**

1. Stabilized polyvinyl chloride moulding compositions containing typical lubricants and other typical processing aids and also a stabilizer combination of (1) primary stabilizers selected from the group comprising metal soaps, aromatic metal carboxylates, metal phenolates and organotin compounds and (2) costabilizers, characterized in that they contain at least one compound corresponding to formula I and/or to formula II below

```
      O        O
      ||       ||
R - S - CH2 -  C - X        (I)
```

```
      O        O
      ||       ||
R - S - CH2 -  C - X        (II)
      ||
      O
```

in which

R is a $C_1$-$C_{18}$ alkyl radical, a $C_5$ or $C_6$ cycloalkyl radical, a phenyl radical, a $C_7$-$C_{11}$ alkylphenyl radical or an X-

CO-$CH_2$ radical while X is an $NH_2$ group or an OM group in which M is lithium, sodium or potassium, as costabilizer.

2. Stabilized polyvinyl chloride moulding compositions as claimed in claim 1, characterized in that they contain 0.02 to 0.5 part by weight of at least one compound corresponding to formula I and/or formula II in claim 1 to 100 parts by weight polymer.

3. Stabilized polyvinyl chloride moulding compositions as claimed in claims 1 and 2, characterized in that they contain 0.1 to 3 parts by weight calcium soaps and/or 0.1 to 3.0 parts by weight barium soaps and/or 0.1 to 3.0 parts by weight zinc soaps to 100 parts by weight polymer, the soaps being derived from $C_8$-$C_{22}$ fatty acids.

4. Stabilized polyvinyl chloride moulding compositions as claimed in claims 1 to 3, characterized in that they contain 0.2 to 5 parts by weight of a synthetic, crystalline finely divided sodium alumosilicate containing 13 to 25 percent by weight bound water which in the anhydrous form, has the composition 0.7 - 1.1 $Na_2O_3 \cdot Al_2O_3 \cdot$ 1.3 - 2.4 $SiO_2$ to 100 parts by weight polymer.

5. Stabilizer combinations for polyvinyl chloride moulding compositions containing primary stabilizers from the group comprising metal soaps, aromatic metal carboxylates, metal phenolates and organotin compounds, costabilizers and optionally typical lubricants and other typical processing aids, characterized in that they contain at least one compound of formula I and/or formula II in claim 1 as costabilizers.

6. Stabilizer combinations as claimed in claim 5, characterised in that they contain 0,5 to 10 parts by weight calcium soaps and/or 0.5 to 10 parts by weight barium soaps and/or 0.5 to 10 parts by weight zinc soaps to 1 part by weight of the compound of formula I and/or formula II in claim 1, the soaps being derived from $C_8$-$C_{22}$ fatty acids and the total quantity of metal soaps not exeeding 20 parts by weight to 1 part by weight of the compounds of formulas I and II.

7. Stabilizer combinations as claimed in claims 5 and 6, characterised in that they contain 0.2 to 20 parts by weight of a synthetic, crystalline, finely divided sodium alumosilicate containing 13 to 25 percent by weight bound water which in the anhydrous form, has the composition 0.7 - 1,1 $Na_2O \cdot Al_2O_3 \cdot$ 1.3 - 2.4 $SiO_2$ to 1 part by weight of a compound of formula I and/or II in claim 1.

**Revendications**

1. Matières à mouler stabilisées de chlorure de polyvinyle contenant des lubrifiants habituels et d'autres agents auxiliaires habituels de traitement, ainsi qu'une combinaison de stabilisants comprenant (1) des stabilisants primaires choisis parmi le groupe comprenant des savons de métaux, des carboxylates aromatiques de métaux, des phénolates de métaux et des composés d'organo-étain, et (2) des costabilisants, caractérisées en ce que, comme costabilisants, elles contiennent au moins un composé de formule I et/ou de formule II:

$$R-\overset{\overset{O}{\|}}{S}-CH_2-\overset{\overset{O}{\|}}{C}-X \qquad (I)$$

$$R-\underset{\underset{O}{\|}}{\overset{\overset{O}{\|}}{S}}-CH_2-\overset{\overset{O}{\|}}{C}-X \qquad (II)$$

dans lesquelles R représente un radical alkyle contenant 1 à 18 atomes de carbone, un radical cycloalkyle contenant 5 ou 6 atomes de carbone, un radical phényle, un radical alkylphényle contenant 7 à 11 atomes de carbone ou un radical X-CO-$CH_2$, tandis que X représente un groupe $NH_2$ ou un groupe OM dans lequel M représente le lithium, le sodium ou le potassium.

2. Matières à mouler stabilisées de chlorure de polyvinyle selon la revendication 1, caractérisées en ce que, pour 100 parties en poids de polymère, elles contiennent 0,02 à 5 parties en poids d'au moins un composé de formule I et/ou de formule II selon la revendication 1.

3. Matières à mouler stabilisées de chlorure de polyvinyle selon les revendications 1 et 2, caractérisées en ce que, pour 100 parties en poids de polymère, elles contiennent 0,1 à 3,0 parties en poids de savons de calcium et/ou 0,1 à 3,0 parties en poids de savons de baryum et/ou 0,1 à 3,0 parties en poids de savons de zinc, les savons dérivant d'acides gras contenant 8 à 22 atomes de carbone.

4. Matières à mouler stabilisées de chlorure de polyvinyle selon les revendications 1 à 3, caractérisées en ce que, pour 100 parties en poids de polymère, elles contiennent 0,2 à 5 parties en poids d'un aluminosilicate de sodium synthétique, cristallin, finement divisé et contenant 13 à 25 % en poids d'eau fixée, cet aluminosilicate de sodium ayant, rapporté à la forme anhydre, la composition suivante 0,7 - 1,1 $Na_2O \cdot Al_2O_3 \cdot$ 1,3 - 2,4 $SiO_2$.

5. Combinaisons de stabilisants pour matières à mouler de chlorure de polyvinyle, contenant des stabilisants primaires choisis parmi le groupe comprenant des savons de métaux, des carboxylates aromatiques de

métaux, des phénolates de métaux et des composés d'organo-étain, des costabilisants et éventuellement des agents lubrifiants habituels, ainsi que d'autres agents auxiliaires habituels de traitement, caractérisées en ce qu'elles contiennent au moins un composé de formule I et/ou de formule II selon la revendication 1 comme costabilisants.

6. Combinaisons de stabilisants selon la revendication 5, caractérisées en ce que, pour 1 partie en poids du composé de formule I et/ou de formule II selon la revendication 1, elles contiennent 0,5 à 10 parties en poids de savons de calcium et/ou 0,5 à 10 parties en poids de savons de baryum et/ou 0,5 à 10 parties en poids de savons de zinc, les savons dérivant d'acides gras contenant 8 à 22 atomes de carbone, tandis que la quantité totale de savons de métaux ne dépasse pas 20 parties en poids pour 1 partie en poids de composés répondant aux formules I et II.

7. Combinaisons de stabilisants selon les revendications 5 et 6, caractérisées en ce que, pour 1 partie en poids du composé de formule I et/ou de formule II selon la revendication 1, elles contiennent 0,2 à 20 parties en poids d'un aluminosilicate de sodium synthétique, cristallin, finement divisé, contenant 13 à 25 % en poids d'eau fixée et ayant, rapporté à la forme anhydre, la composition suivante: 0,7 - 1,1 $Na_2O_3 \cdot Al_2O_3 \cdot$ 1,3 - 2,4 $SiO_2$.